# EUROPÄISCHE PATENTANMELDUNG

(11) **EP 0 872 715 A2**
(43) Veröffentlichungstag der Anmeldung: **21.10.1998**
(21) Anmeldenummer: 98104550.3
(22) Anmeldetag: 13.03.1998
(51) Int. Cl.: G01D 9/00

(54) **Vorrichtung zur Erfassung und Verarbeitung von Messdaten**

(30) Priorität: 18.04.1997 DE 19716364
(71) Anmelder: Babcock Kraftwerkstechnik GmbH, 46049 Oberhausen (DE)
(72) Erfinder: Rosenthal, Frank, 44797 Bochum (DE)
(74) Vertreter: Radünz, Ingo, Dipl.-Ing.

(57) **Zusammenfassung**

Eine Vorrichtung zur Erfassung und Verarbeitung von Meßdaten ist mit mehreren Meßwerteingängen (3, 4, 10) versehen, die über einen ADDA-Wandler (7) mit einem Rechner verbunden sind. Einige Meßwerteingängen (3) sind mit Meßwertumformern (5) und andere Meßwerteingängen (4) sind mit einer Anschlußkarte (6) mit integrierter Vergleichsmeßstelle verbunden. Die Meßwertumformer (5) und die Anschlußkarte (6) sind mit einem ADDA-Wandler (7) verbunden. Die Meßwertumformer (5), die Anschlußkarte (6) und der ADDA-Wandler (7) sind in einer tragbaren Einheit (1) untergebracht, die über eine parallele Schnittstelle (8) an einen tragbaren PC (9) angeschlossen ist. Die Einheit (1) ist mit mehreren Digital-Eingängen (13) und Digital-Ausgängen (14) sowie mit mehreren analogen Spannungseingänge (10) versehen, die mit dem ADDA-Wandler (7) verbunden sind. Neben den Spannungseingänge (10) ist eine Elektronik zur Umsetzung von Stromeingängen (11) vorgesehen.

## Beschreibung

Die Erfindung betrifft eine Vorrichtung zur Erfassung und Verarbeitung von Meßdaten mit den Merkmalen des Oberbegriffes des Anspruches 1.

Eine bekannte Vorrichtung dieser Art dient der Auswertung von Temperatur- und Druck-Meßdaten für eine Langzeitüberwachung von Dampferzeuger-Bauteilen. Bei diesen Einrichtungen kommen Hybridrekorder, Scannerboxen und PC mit IEEE-Schnittstellen und MCPS-Meßdatenerfassungssoftware zum Einsatz. Nachteilig bei diesem Meßaufbau sind die großen Abmessungen der eingesetzten Geräte, deren großes Gewicht und kleine Abtastraten von maximal 1/6 bis 1/2 Hz. Für jeden PC ist eine eigene, durch einen Hardwarestecker geschützte Softwarelizenz erforderlich. Die Hybridrekorder können ausschließlich Spannungen verarbeiten, so daß für Druckmessungen zusätzlich eine Spannungsversorgung, Druckmeßdosen und in den meisten Fällen Widerstände erforderlich sind.

Der Erfindung liegt die Aufgabe zugrunde, die gattungsgemäße Vorrichtung so zu gestalten, daß eine mobile Meßwerterfassung und ein weiter Anwendungsbereich möglich wird.

Diese Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind Gegenstand der Unteransprüche.

Mit Hilfe der erfindungsgemäßen Vorrichtung ist bei einem mobilen Einsatz eine schnelle Ermittlung von Daten ohne großen Meßaufbau sowie eine mathematische Verknüpfung von mehreren Signalen möglich. Die analogen Spannungs- und Stromeingänge erlauben die Einspeisung von elektrischen Signalen aus externen Meßinstrumenten und deren Verarbeitung. Die digitalen Ein- und Ausgänge lassen den Aufbau von Steuer- und Regelkreisen zu. Die verwendeten Bauteile erlauben einen kompakten Aufbau in einer tragbaren Einheit, wobei für Vielkanalmessungen mehrere Einheiten zusammengeschaltet werden können. Über die mit dem ADDA-Wandler verbundene Software kann für jeden Anwendungsfall ein entsprechendes Programm entwickelt werden, das als Run-Time-Modul auf jedem Rechner eingesetzt werden kann, so daß auf lizenzpflichtige Fremdprogramme verzichtet werden kann.

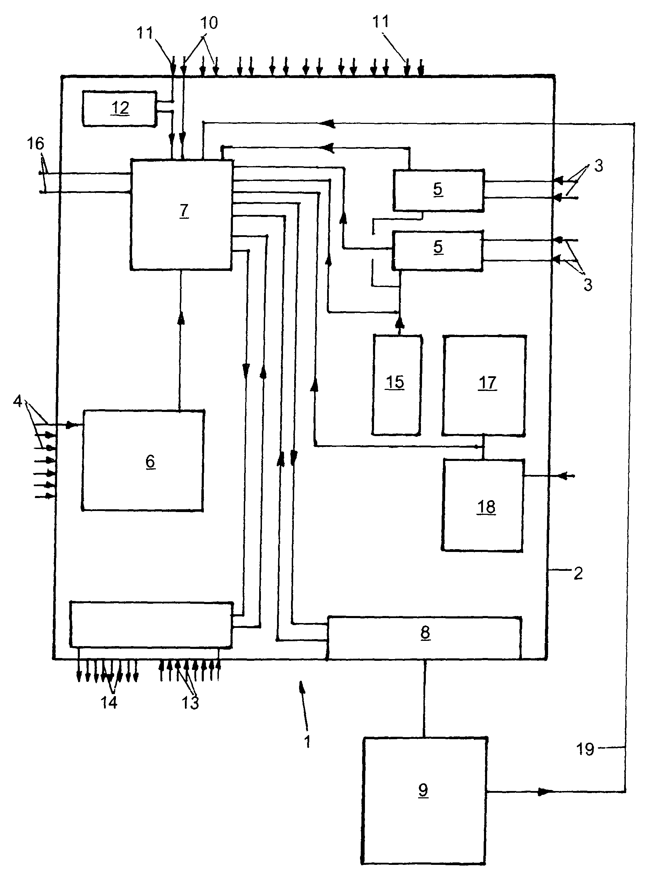

Ein Ausführungsbeispiel ist in der Zeichnung dargestellt und wird im folgenden näher erläutert. Die Zeichnung stellt das Schema einer Vorrichtung zur Erfassung und Verarbeitung von Meßdaten dar.

Zur Erfassung und Verarbeitung von Meßwerten dient eine tragbare Einheit 1, die aus einem Gehäuse 2 besteht. Die Einheit 1 ist mit Meßwerteingängen 3, 4 versehen. Diese Meßwerteingänge bestehen aus mehreren beispielsweise zwei Differenzdruckanschlüssen 3 und aus mehreren beispielsweise sieben Anschlüssen 4 für jeweils ein Ni/Cr/Ni-Thermoelement. Die Differenzdruckanschlüsse 3 sind zu zwei Meßwertumformern 5 geführt, die die Druckwerte in Spannungswerte umformen. Die Meßwertumformer 5 sind zur Stromversorgung mit einer Batterie 15 von beispielsweise 2 x 9 V verbunden. Die Anschlüsse 4 für die Thermoelemente sind zu einer Anschlußkarte 6 geführt, auf der eine Vergleichsmeßstelle aufgebaut ist. Die Meßwertumformer 5 und die Anschlußkarte 6 sind mit einem ADDA-Wandler 7 verbunden. Die Meßwertumformer 5, die Anschlußkarte 6 und der ADDA-Wandler 7 sind innerhalb des Gehäuses 2 der tragbaren Einheit 1 angeordnet.

Die Einheit 1 ist mit einer parallelen Schnittstelle 8 versehen, die mit dem ADDA-Wandler 7 verbunden ist und an die ein tragbarer PC 9 angeschlossen ist. Durch diese Verbindung der Einheit 1 mit dem PC 9 lassen sich Abtastraten bis zu 20 000 und im EPP-Betrieb bis zu 100 000 Samples pro Sekunde erreichen.

Die Einheit 1 ist weiterhin mit mehreren beispielsweise mit acht analogen Spannungseingänge 10 versehen. Parallel zu diesen Spannungseingänge 10 sind analoge Stromeingänge 11 vorgesehen, die mit einer Umsetzungseletronik 12 zur Umsetzung der Stromsignale in Spannungssignale verbunden sind. Die Spannungseingänge 10 sind direkt und die Stromeingänge 11 sind über die Umsetzungseletronik 12 mit dem ADDA-Wandler 7 verbunden. An die Spannungs- und Stromeingänge 10, 11 sind die Anschlußkabel von externen Meßgeräten, wie Emissionsmeßgeräte, Ölmengenzähler u. a. anzuschließen. Auf diese Weise wird es möglich, die von diesen Meßgeräten bereits zu Spannungs- oder Stromwerten verarbeiteten Meßdaten in die eigene Meßdatenverarbeitung mit einzubeziehen.

Die Einheit 1 ist mit mehreren, im vorliegenden Fall mit acht Digital-Eingängen 13 und acht Digital-Ausgängen 14 versehen, die mit dem ADDA-Wandler 7 verbunden sind. An diese Ein- und Ausgänge sind Steuer- oder Regeleinrichtungen anzuschließen, über die, angesteuert durch den PC 9, das über die Einheit 1 auszuführende Erfassungs- und Verarbeitungsverfahren der Meßwerte gesteuert oder geregelt werden kann.

Der ADDA-Wandler 7 ist mit der parallelen Schnittstelle 8 und mit zwei Analog-Ausgängen 16 verbunden. Mit den Analog-Ausgängen 16 ist ein Aufbau von Steuer- und Regelkreisen möglich.

Die Stromversorgung der Einheit 1 kann durch einen eingebauten Akkumulator 17 erfolgen, der mit einer Ladeelektronik 18 gekoppelt ist, an die ein Netzteil angeschlossen wird. Der tragbare PC 9 ist ebenfalls mit einer eigenen Stromversorgung ausgerüstet. Über eine Verbindung 19 zwischen dem PC 9 und der Einheit 1 kann diese auch über den PC 9 mit Strom versorgt werden. Die Batterie 15 ist außer mit den Meßwertumformern 5 auch mit dem ADDA-Wandler 7 verbunden. Über Schalter in den Verbindungsleitungen und eine entsprechende Schaltung kann die Batterie 15 geprüft und die Batteriespannung an externe Geräte weitergeschaltet werden.

Mit Hilfe der beschriebenen Vorrichtung lassen sich folgende Messungen einzeln oder in Kombination ausführen wie unter anderen beispielsweise: Emissionsmessung (O₂, NOₓ, CO, CO₂); Messung von Luft- und/oder Rauchgasmengen mittels der integrierten Druckaufnehmer bei Venturidüsen und Normblende sowie deren Umrechnung auf den Normzustand; Ermittlung von Medium- oder Materialtemperaturen; Bestimmung von Dampf-, Öl- und/oder Gasmengen mittels der Ausgangssignale von Zählern oder externen Differenzdruckaufnehmern von Blenden. Für eine einfache Meßaufgabe reicht eine einzige Einheit aus. Werden Vielkanalmessungen durchgeführt, so kann durch eine Zusammenschaltung von bis zu acht Einheiten die Anzahl der zur Verfügung stehenden Ein- und Ausgangskanäle erhöht werden. Ein mögliches weiteres Aufgabengebiet der beschriebenen mobilen Meßdatenerfassung ist die HochgeschwindigkeitsMeßdatenverarbeitung, wodurch teure und aufwendige Meßsysteme zur Messung von Druckstößen und Schwingungen im Kessel durch das erfindungsgemäße System abgelöst werden können.

## Patentansprüche

1. Vorrichtung zur Erfassung und Verarbeitung von meßdaten, die mit Meßwerteingängen (3, 4, 10) versehen ist, die über einen ADDA-Wandler (7) mit einem Rechner verbunden sind, dadurch gekennzeichnet, daß einige Meßwerteingängen (3) mit Meßwertumformern (5) und andere Meßwerteingängen (4) mit einer Anschlußkarte (6) mit integrierter Vergleichsmeßstelle verbunden sind, daß die Meßwertumformer (5) und die Anschlußkarte (6) mit einem ADDA-Wandler (7) verbunden sind, daß die Meßwertumformer (5), die Anschlußkarte (6) und der ADDA-Wandler (7) in einer tragbaren Einheit (1) untergebracht sind, die über eine parallele Schnittstelle (8) an einen tragbaren PC (9) angeschlossen ist, daß die Einheit (1) mit mehreren analogen Spannungseingänge (10) versehen ist, die mit dem ADDA-Wandler (7) verbunden sind, daß neben den Spannungseingänge (10) eine Elektronik zur Umsetzung von Stromeingängen (11) vorgesehen ist, und daß die Einheit (1) mit mehreren Digital-Eingängen (13) und Digital-Ausgängen (14) versehen ist.

2. Vorrichtung nach Anspruch 1, dadurch gekennzeichnet, daß die Meßwerteingänge (3) als Differenzdruckanschlüsse ausgebildet sind, die zu einem Druck/Spannungs-Meßwertumformer (5) geführt sind.

3. Vorrichtung nach Anspruch 1 oder 2, dadurch gekennzeichnet, daß die Meßwerteingänge (4) für den Anschluß an jeweils ein Thermoelement ausgebildet sind.

4. Vorrichtung nach einem der Ansprüche 1 bis 3, dadurch gekennzeichnet, daß der ADDA-Wandler (7) mit zwei Analog-Ausgängen (16) versehen ist.

5. Vorrichtung nach einem der Ansprüche 1 bis 4, dadurch gekennzeichnet, daß die Einheit (1) mit einem Akkumulator (17) und einer Ladeelektronik (18) versehen und/oder an die Stromversorgung (19) des PC (9) angeschlossen ist.

6. Vorrichtung nach einem der Ansprüche 1 bis 5, dadurch gekennzeichnet, daß in der Einheit (1) eine Batterie (15) untergebracht ist, die mit den Meßwertumformern (5) und dem ADDA-Wandler (7) verbunden ist und deren Spannung an externe Geräte weiterzuschalten ist.
